Europäisches Patentamt

(19) European Patent Office

Office européen des brevets

(11) Numéro de publication : **0 051 012**
**B1**

# (12) FASCICULE DE BREVET EUROPÉEN

(45) Date de publication du fascicule du brevet :
**04.07.84**

(21) Numéro de dépôt : **81401591.3**

(22) Date de dépôt : **14.10.81**

(51) Int. Cl.³ : **C 03 B 35/18,** C 03 B 23/025,
C 03 B 23/033, B 65 G 39/04,
F 16 C 13/00

---

(54) **Dispositif de bombage de feuilles de verre.**

---

(30) Priorité : **17.10.80 FR 8022213**

(43) Date de publication de la demande :
**05.05.82 Bulletin 82/18**

(45) Mention de la délivrance du brevet :
**04.07.84 Bulletin 84/27**

(84) Etats contractants désignés :
**BE DE IT SE**

(56) Documents cités :
**FR-A- 2 383 890**
**US-A- 3 545 951**
**US-A- 3 934 996**

(73) Titulaire : **SAINT-GOBAIN VITRAGE**
**Les Miroirs 18, avenue d'Alsace**
**F-92400 Courbevoie (FR)**

(72) Inventeur : **Potier, Pierre**
**2 Avenue du Fresnay**
**F-78500 Sartrouville (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Description

L'invention se rapporte à un dispositif pour bomber des feuilles de verre se trouvant à l'état déformable, comportant une forme de bombage constituée par un groupe de tiges cintrées susceptibles de pivoter autour d'un axe passant par leurs deux extrémités, chaque tige cintrée étant entourée d'une gaine tubulaire du type tube métallique annelé en plusieurs tronçons résistante à la torsion mais souple en direction axiale, reposant sur la tige cintrée par l'intermédiaire de bagues de glissement, cette gaine étant entraînée en rotation sur elle-même autour de la tige cintrée. Un tel dispositif est connu du FR-A-2 189 330.

Une telle machine possède une forme de bombage constituée par un groupe de tiges cintrées susceptibles de pivoter autour d'un axe passant par leurs deux extrémités, chaque tige cintrée étant entourée d'une gaine tubulaire annelée, résistant à la torsion, mais souple en direction axiale, cette gaine étant fixée par une extrémité à un pignon monté à rotation sur la tige cintrée et pouvant ainsi tourner sur elle-même quelle que soit la position de la tige cintrée.

Comme décrit dans le brevet français publié sous le n° 2 189 330, on donne à la gaine tubulaire annelée un diamètre intérieur supérieur au diamètre de la tige cintrée et on dispose de place en place entre la tige cintrée et la gaine, des bagues de glissement en graphite susceptibles de tourner sur la tige cintrée et sur lesquelles la gaine tubulaire s'appuie. Les gaines sont annelées, c'est-à-dire qu'elles ont un profil ondulé ou en créneaux, et les bagues de glissement sont logées et fixées chacune dans une des gorges que les créneaux ou les ondulations forment à l'intérieur de la gaine.

Pour permettre la mise en place des bagues de glissement, les gaines sont formées par l'assemblage d'une pluralité de segments ou tronçons individuels accolés, soudés les uns aux autres, sur toute la périphérie des portions accolées et c'est avant l'assemblage, à la jonction des tronçons successifs que sont placés les bagues.

Sur le plan technique, de telles gaines donnent entièrement satisfaction, mais le coût de fonctionnement des machines de bombage qu'elles équipent est important. En effet, il faut environ 40 tronçons de gaine par tige cintrée, et lorsqu'une usure apparaît sur l'un seulement des tronçons, c'est l'ensemble de la gaine qu'il faut changer.

La présente invention vise à réduire ces frais de fonctionnement en proposant des gaines dont les tronçons sont reliés par un assemblage mécanique démontable. Ainsi lorsque dans une gaine un seul tronçon est usé, on démonte et on remplace uniquement le tronçon usé. Selon l'invention, le dispositif du type précité est caractérisé en ce que chaque tronçon de gaine se termine par des collets qui s'emmanchent dans les collets des tronçons voisins, des moyens mécaniques dont au moins un est démontable étant en outre prévus pour solidariser les collets emboîtés et assurer le blocage en rotation des différents tronçons les uns par rapport aux autres.

Les différents tronçons sont alors emboîtés les uns dans les autres et solidarisés par un moyen mécanique approprié. Selon un mode de réalisation, les extrémités des tronçons sont munies de déformations du type pas de vis ou éléments de pas de vis, de telle sorte qu'ils se vissent les uns dans les autres.

Dans un autre mode de réalisation les tronçons de gaine s'emmanchent encore les uns dans les autres et ils portent à une extrémité des échancrures, à l'autre extrémité, des ergots, destinés à s'engager dans les échancrures d'un tronçon voisin.

L'invention sera maintenant décrite plus en détail, en référence aux figures qui représentent :

Figure 1 une vue d'ensemble d'une tige cintrée recouverte par sa gaine annelée.

Figure 2 des tronçons de gaine emboîtés et assemblés par vissage.

Figure 3 des tronçons de gaine emboîtés et assemblés par ergots et échancrures.

Figure 4A et 4B des exemples de formes d'échancrure.

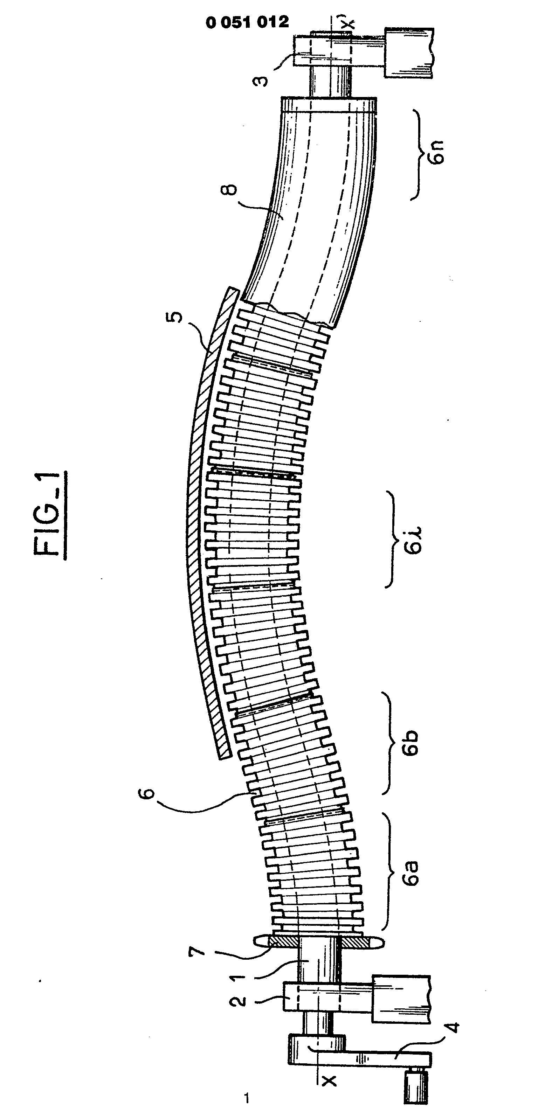

La figure 1 montre une des tiges cintrées 1 d'une machine de bombage de feuilles de verre. Cette tige 1 est montée à pivotement par ses deux extrémités dans des paliers 2 et 3 d'axe XX'. Pour incliner plus ou moins cette tige, et donc pour conférer aux feuilles de verre une courbure plus ou moins accentuée, on utilise des moyens mécaniques appropriés, tels une manivelle 4.

Lorsque la tige cintrée n'est pas redressée et qu'elle se trouve couchée dans le plan de transport des feuilles de verre, on n'obtient aucun bombage. Au contraire, lorsqu'elle est redressée hors de ce plan de transport des feuilles de verre, comme montré sur cette figure 1, elle confère aux feuilles de verre 5 qui passent sur elle, une certaine courbure, cette courbure étant maximale lorsque le redressement par rapport au plan initial de transport des feuilles de verre est de 90°.

Autour de cette tige cintrée est montée une gaine tubulaire annelée souple 6. A une de ses extrémités, la gaine 6 est fixée à un pignon 7 qui permet de la faire tourner sur elle-même autour de la tige 1, grâce à un dispositif d'entraînement non représenté. Par dessus la gaine souple 6, il est prévu un revêtement en forme de manchon 8, en tissu non combustible par exemple un tissu en fibres de verre. Cette gaine annelée est formée d'une série de tronçons de gaine 6a, 6b, ..., 6i, ... 6n, emmanchés les uns au bout des autres, les différents tronçons étant cependant rendus solidaires les uns des autres par un moyen mécanique approprié, de façon à permettre la rotation sur elle-même de l'ensemble de la gaine, même avec un seul entraînement à une extrémité par le pignon 7.

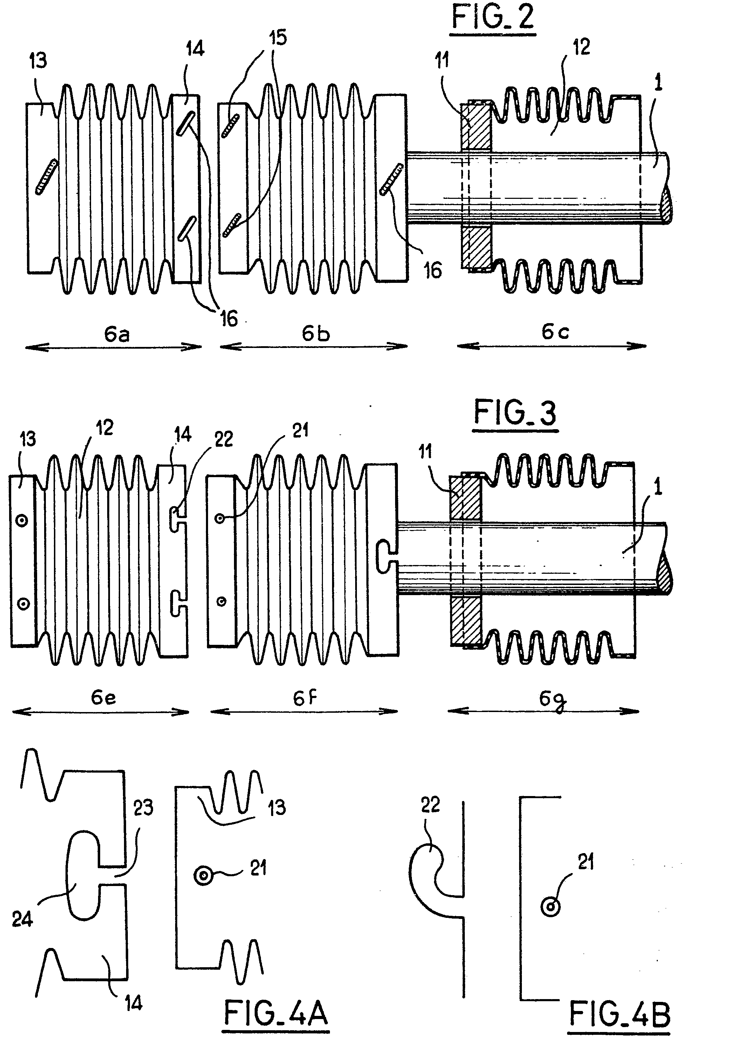

La figure 2 montre plus en détail plusieurs tronçons 6a, 6b, 6c, de gaine souple 6 enfilés sur une tige cintrée 1, et en appui sur ladite tige par l'intermédiaire de bagues de glissement telles que 11, par ex, en graphite. Chaque tronçon 6a, 6b, ou 6c de gaine comporte une partie centrale à soufflets 12 et aux extrémités de ces soufflets des collets 13 et 14 exempts d'ondulations. L'un des deux collets, par exemple 14 est de diamètre légèrement supérieur à l'autre, par exemple 13, de façon que deux tronçons tels que 6a et 6b voisins, puissent s'emmancher les uns dans les autres grâce à leurs collets 13 et 14. Ces collets sont de diamètre légèrement inférieur au plus fort diamètre de la partie centrale à soufflets 12 de façon que les feuilles de verre ne portent que sur les ondulations des soufflets 12.

Pour rendre les différents tronçons solidaires les uns des autres et permettre leur entraînement en rotation par l'une des extrémités de la gaine 6, on produit sur les collets 13 et 14 des déformations complémentaires 15 et 16. Il peut s'agir de pas de vis complets ou seulement d'éléments de pas de vis tels que ceux qui existent sur les goulots de bouteilles et leurs bouchons métalliques vissants. Les éléments complémentaires peuvent être formés en repoussant le métal, ils peuvent également être formés, sur l'un des deux collets destinés à coopérer, par des portions recourbées du bord du collet, ces portions recourbées s'insérant entre les filets en métal repoussé de l'autre collet.

Le sens des pas de vis est tel que, par la rotation des gaines sur elles-mêmes pour assurer le transport des feuilles de verre sur la machine de bombage, les différents tronçons ont tendance à se visser les uns sur les autres. Il peut aussi s'agir de bossages complémentaires qui ne naissent pas au bord des collets, ou d'une combinaison de toutes ces déformations. Les déformations des collets peuvent être en creux, c'est-à-dire dirigées vers l'intérieur des collets, ou au contraire en saillie vers l'extérieur. Dans la mesure où, sur le collet 13, le plus petit, elles sont dirigées vers l'intérieur, on prévoit des méplats sur les bagues de glissement pour loger lesdites déformations. De préférence, on réalise ces déformations en saillie vers l'extérieur pour éviter d'avoir à modifier la forme des bagues de glissement et d'avoir à prendre trop de précautions pour leur mise en place à l'intérieur de la gaine 6.

De préférence, les déformations en forme de filets de pas de vis sont au moins au nombre de trois, réparties sur la périphérie des collets. Ainsi les collets maintenus solidaires les uns des autres en des zones réparties sur leur périphérie ne se désemboîteront pas, même en tournant sur des tiges cintrées. Pour mettre en place une gaine 6 sur une tige cintrée 1, on visse les uns au bout des autres des tronçons 6a, 6b, ..., 6i, ... 6n, en ayant soin d'engager préalablement dans le collet 13, le plus petit en diamètre, une bague 11 de glissement, après quoi, la gaine 6 étant constituée, on l'enfile sur la tige 1.

La figure 3 montre un autre mode de réalisation. On retrouve des tronçons de gaines 6e, 6f, 6g enfilés sur une tige cintrée 1, et en appui sur ladite tige par l'intermédiaire de bagues de glissement 11. Les tronçons tels que 6e possèdent toujours un soufflet central 12 et deux collets d'extrémité 13 et 14 de diamètres tels qu'ils permettent l'emmanchement de deux tronçons l'un sur l'autre. Mais ces deux collets d'extrémité possèdent respectivement des ergots 21, respectivement des échancrures 22 destinées à recevoir les ergots 21, échancrures et ergots étant répartis sur la périphérie des collets avec le même pas. Les ergots 21 sont portés par les collets 13 de plus petit diamètre et ils sont de faible hauteur pour ne pas dépasser le plan tangent aux ondulations des soufflets sur lequel reposent les feuilles de verre. De préférence, les couples ergots et échancrures sont au moins au nombre de 3, répartis sur la périphérie des collets pour assurer un bon maintien, même sous les efforts produits par la rotation autour de tiges cintrées. On obtient ainsi un montage à baïonnette.

Les échancrures 22 peuvent avoir la forme montrée sur la figure 4A, c'est-à-dire avec une rainure 23 débouchant sur une boutonnière 24 réservant deux zones de blocage pour l'ergot et permettant un montage des gaines 6 dans les deux sens de rotation. Sinon les échancrures 22 peuvent avoir la forme de haricot montrée sur la figure 4B, c'est-à-dire réservant une seule zone de blocage de l'ergot 21 ; donc dans ce cas les tronçons doivent être montés pour tourner dans le sens qui a tendance à enfoncer l'ergot 21 dans le fond de sa zone de blocage.

Dans une variante de réalisation, pour éviter d'amoindrir la résistance mécanique des collets en enlevant du métal pour faire l'échancrure, on repousse seulement le métal suivant une ligne ayant la forme de l'échancrure.

Ainsi donc, quel que soit le mode de réalisation choisi, celui illustré par la figure 2 ou celui illustré par les figures 3 et 4A, 4B, lorsque dans une gaine 6, un seul tronçon est usé, il suffit de retirer cette gaine de la tige 1 qu'elle recouvre, de séparer le tronçon endommagé des tampons voisins par dévissage ou par déblocage des baïonnettes, de mettre à la place un tronçon neuf, de solidariser les différents tronçons par vissage ou blocage des baïonnettes et de réenfiler sur la tige 1.

L'ensemble de la gaine peut être constitué de tronçons identiques ou on peut utiliser pour confectionner une même gaine des tronçons de différentes longueurs et/ou des tronçons portant des moyens mécaniques d'assemblage différents.

On pourra également avoir certains portions de gaines constituées de tronçons emboîtés et assemblés par un moyen mécanique démontable alors que d'autres portions de la même gaine seront constituées de tronçons assemblés par un moyen mécanique non démontable. Comme moyen mécanique non démontable, on pourra par exemple faire des soudures des collets emboîtés en au moins 3 points.

**Revendications**

1. Dispositif pour bomber des feuilles de verre (5) se trouvant à l'état déformable, comportant une forme de bombage constituée par un groupe de tiges cintrées (1) susceptibles de pivoter autour d'un axe passant par leurs deux extrémités, chaque tige cintrée étant entourée d'une gaine tubulaire du type tube métallique annelé (6) en plusieurs tronçons (6a, ..., 6n) résistante à la torsion mais souple en direction axiale, reposant sur la tige cintrée (1) par l'intermédiaire de bagues de glissement (11), cette gaine étant entraînée en rotation sur elle-même autour de la tige cintrée, caractérisé en ce que chaque tronçon (6a, ..., 6n) de gaine (6) se termine par des collets (13) qui s'emmanchent dans les collets (14) des tronçons voisins, des moyens mécaniques dont au moins un est démontable (15, 16, 21, 22) étant en outre prévus pour solidariser les collets emboîtés (13) et assurer le blocage en rotation des différents tronçons (6a, ..., 6n) les uns par rapport aux autres.

2. Dispositif selon la revendication 1, caractérisé en ce que les moyens mécaniques démontables sont constitués par des déformations (15, 16) sur la surface des collets (13, 14), du type filets de pas de vis.

3. Dispositif selon la revendication 2, caractérisé en ce que le sens des filets de pas de vis est tel que les gaines (6) étant entraînés en rotation sur les tiges cintrées (1), les différents tronçons (6a, ..., 6n) ont tendance à se visser les uns sur les autres.

4. Dispositif selon la revendication 1, caractérisé en ce que les moyens mécaniques sont des échancrures (22) et des ergots (21) appartenant aux collets (14, 13) destinés à s'emmancher les uns dans les autres, échancrures et ergots étant répartis sur la périphérie des collets, avec le même pas de façon qu'échancrures et ergots coopèrent.

5. Dispositif selon la revendication 4, caractérisé en ce que aux échancrures (22), le métal est seulement repoussé.

6. Dispositif selon la revendication 1, caractérisé en ce que certaines portions de la gaine sont constituées de tronçons assemblés par un moyen mécanique non démontable du type soudure par points.

7. Dispositif selon l'une quelconque des revendications précédentes caractérisé en ce que les moyens mécaniques solidarisant les collets sont au moins au nombre de 3 régulièrement répartis sur la périphérie des collets.

8. Dispositif selon l'une quelconque des revendications précédentes caractérisé en ce que les moyens mécaniques solidarisant les collets ne dépassent jamais la surface des tronçons sur laquelle reposent les feuilles de verre.

## Claims

1. Device for curving glass sheets (5) which are in the deformable state, comprising a curving die formed by a group of curved rods (1) capable of pivoting about an axis passing through their two ends, each curved rod being surrounded by a tubular sheath of the ringed metal tube type (6) in a plurality of sections (6a, ..., 6n) resistant to torsion but flexible in the axial direction, resting on the curved rod (1) by means of sliding rings (11), this sheath being driven in rotation about the curved rod, characterised in that each section (6a, ..., 6n) of the sheath (6) terminates in collars (13) engaged in the collars (14) of the adjacent sections, mechanical means of which at least one is disconnectable (15, 16, 21, 22) being further provided to join together the engaged collars (13) and ensure fixing in rotation of the different sections (6a, ..., 6n) one with respect to the others.

2. Device according to claim 1, characterised in that the disconnectable mechanical means are formed of deformations (15, 16) on the surface of the collars (13, 14) of a type forming part of a screw thread.

3. Device according to claim 2, characterised in that the direction of the screw thread parts is such that, the sheaths (6) being driven in rotation on the curved rods (1), the different sections (6a, ..., 6n) tend to be screwed one into the other.

4. Device according to claim 1, characterised in that the mechanical means are openings (22) and lugs (21) of the collars (14, 13) intended to be engaged one in another, the openings and lugs being distributed at the periphery of the collars with the same separation so that the openings and lugs cooperate with each other.

5. device according to claim 4, characterised in that at the openings (22) the metal is merely embossed.

6. device according to claim 1, characterised in that certain portions of the sheath are formed of sections assembled together by a non-disconnectable mechanical means of the spot-welded type.

7. Device according to any one of the preceding claims characterised in that the mechanical means joining the collars are at least 3 in number and regularly distributed around the periphery of the collars.

8. Device according to any one of the preceding claims characterised in that the mechanical means joining the collars never extend beyond the surfaces of the sections on which the glass sheets rest.

## Ansprüche

1. Vorrichtung zum Biegen von Glasscheiben, die sich im verformbaren Zustand befinden, mit einer Biegeform, die durch eine Gruppe von gekrümmten Stäben (1) gebildet ist, welche um eine durch ihre beiden Enden verlaufende Achse verschwenkbar sind, wobei jeder gekrümmte Stab von einer röhrenförmigen Hülse in Art eines geringelten metallischen Rohres (6) mit mehreren Abschnitten (6a, ..., 6n) umgeben ist, welche torsionssteif, jedoch in axialer Richtung nachgiebig sind und auf dem gekrümmten Stab (1) unter Zwischenschaltung von Gleitringen (11) gelagert sind, wobei die Hülse selbst um den gekrümmten Stab drehbar antreibbar ist, dadurch gekennzeichnet, daß jeder Abschnitt (6a, ..., 6n) der Hülse (6) in Bunden (13) endet, die an Bunden (14) benachbarter Abschnitte durch mechanische Mittel ansteckbar sind, von denen mindestens eines (15, 16, 21, 22) demontierbar ist und die außerdem zur Verbindung der aneinandergesteckten Bunde (13) vorgesehen sind und eine Drehverriegelung der verschiedenen Abschnitte (6a, ..., 6n) miteinander sicherstellen.

2. Vorrichtung nach Anspruch 1, dadurch gekennzeichnet, daß die demontierbaren mechanischen Mittel durch Ausbildungen (8, 16) auf der Fläche der Bunde (13, 14) in Art von Schraubgewindegängen gebildet sind.

3. Vorrichtung nach Anspruch 2, dadurch gekennzeichnet, daß die Richtung des Schraubgewindes derart ist, wie die Hülsen (6) auf den gekrümmten Stäben drehbar angetrieben sind, wobei die verschiedenen Abschnitte (6a, ..., 6n) das Bestreben haben, sich aneinanderzuschrauben.

4. Vorrichtung nach Anspruch 1, dadurch gekennzeichnet, daß die mechanischen Mittel Aussparungen (22) und Vorsprünge (21) an den Bunden (14, 13) zum Ineinanderstecken besitzen, wobei die Aussparungen und Vorsprünge über dem Umfang der Bunde verteilt mit demselben Abstand angeordnet sind, so daß die Aussparungen und Vorsprünge zusammenwirken.

5. Vorrichtung nach Anspruch 4, dadurch gekennzeichnet, daß zur Bildung der Aussparungen (22) das Metall nur eingedrückt ist.

6. Vorrichtung nach Anspruch 1, dadurch gekennzeichnet, daß bestimmte Teile der Hülse gebildet sind von Abschnitten, die durch eine nicht lösbare mechanische Einrichtung in Art einer Punktschweißung verbunden sind.

7. Vorrichtung nach einem der vorhergehenden Ansprüche, dadurch gekennzeichnet, daß mindestens drei mechanische Mittel zur Verbindung der Bunde regelmäßig um den Umfang der Bunde verteilt angeordnet sind.

8. Vorrichtung nach einem der vorhergehenden Ansprüche, dadurch gekennzeichnet, daß die mechanischen Mittel zum Verbinden der Bunde nicht über die Oberfläche der Abschnitte, auf denen die Glasscheiben aufliegen, vorstehen.

FIG_1

0 051 012

FIG. 2

FIG. 3

FIG. 4A

FIG. 4B